# EUROPÄISCHE PATENTANMELDUNG

(11) **EP 2 907 639 A1**
(43) Veröffentlichungstag der Anmeldung: **19.08.2015**
(21) Anmeldenummer: 14155078.0
(22) Anmeldetag: 13.02.2014
(51) Int. Cl.: B29B 7/94, B29C 47/40, B29K 27/06

(54) **Verfahren zur Herstellung von weich-PVC-Halbfabrikaten**

(71) Anmelder: Sika Technology AG, 6340 Baar (CH)
(72) Erfinder: Wolof, Ulrich, 7031 Laax (CH); Frei, Fabian, 8049 Zürich (CH)
(74) Vertreter: Sika Patent Attorneys

(57) **Zusammenfassung**

Die vorliegende Erfindung betrifft die Extrusion von auf Polyvinylchlorid (PVC) basierenden Polymerzusammensetzungen als PVC-Halbfabrikat, insbesondere als Granulat, und insbesondere ein Verfahren, bei dem homogene Polymerzusammensetzungen mit einer Bruchdehnung von 0 bis 270%, einer Zugfestigkeit von mindestens 1 N/mm² und einem Gelierungsgrad von 5 bis 80% unter einem spezifischen Energieeintrag SEI von 0,03 bis 0,09 kWh/kg und hergestellt werden.

Das erfindungsgemäße Verfahren wird zweckmäßig so geführt, dass ein Weichmacher in mehreren Portionen zum nicht compoundierten Polyvinylchlorid zugegeben und diesem eingemischt wird. Das erfindungsgemäße Verfahren bietet dadurch eine schnelle und einfache Möglichkeit der Herstellung von Weich-PVC-Halbfabrikaten, insbesondere als Granulat, deren Herstellung nur eine einzige Verarbeitungsvorrichtung in Form eines Extruders erfordert.

## Beschreibung

### Technisches Gebiet

Die Erfindung betrifft die Herstellung von auf Polyvinylchlorid (PVC) basierenden Polymerzusammensetzungen als PVC-Halbfabrikat, insbesondere in Form von Granulat.

### Stand der Technik

Die hohe Beständigkeit von PVC gegenüber Verbrennung sowie sein niedriger Preis und seine vorteilhaften Verarbeitungseigenschaften gehören zu den Hauptgründen, warum dieses Material heute eine der am meisten verwendeten Kunststoffsorten ist. Nach dem Stand der Technik muss PVC mit Stabilisatoren compoundiert werden, bevor es für die Herstellung von End- oder Halbfabrikaten verwendet werden kann, so zum Beispiel durch Formverfahren mittels Extrusion. Der Ausdruck "Compoundieren" bezieht sich auf einen gesonderten Verarbeitungsschritt, in dem Roh-PVC (d.h. das direkt aus der Polymerisation von Vinylchlorid erhältliche Produkt) unter Erwärmen mit stabilisierenden Additiven und gegebenenfalls Weichmachern, Füllstoffen und weiteren Additiven gemischt wird, um ein im Wesentlichen homogenes Material zu bilden. Dieses Material wird als Halbfabrikat, beispielsweise in Form von Pellets oder einem Granulat an den Endverarbeiter verkauft.

Das Compoundieren von PVC erfordert erhebliche Energiemengen und ist damit ein bedeutender Kostenfaktor bei der Verarbeitung von PVC. Allerdings sind bis heute nur wenige Verfahren beschrieben worden, in denen auf ein Compoundieren verzichtet werden kann. Lange ging man davon aus, dass das Compoundieren eine unbedingte Notwendigkeit der PVC-Herstellung darstellt, da befürchtet wurde, dass sich nicht compoundiertes PVC bei der Extrusion in erheblichem Ausmaß zersetzt.

PVC wird heute je nach Anwendung in Weich-PVC und Hart-PVC unterschieden. Aus Hart-PVC werden unter anderem Rohre und Profile, beispielsweise für Fenster hergestellt, während Weich-PVC, das einen signifikanten Anteil an Weichmacher enthält, häufig als Ummantelung von Kabeln eingesetzt wird. Weitere häufige Anwendungen von Weich-PVC finden sich in Fußbodenbelägen, Schläuchen, Schuhsohlen, Dachabdichtungen oder auch in Gummi-Handschuhen. Weich-PVC enthält, wie erwähnt, einen signifikanten Anteil an Weichmachern, der dem von Natur aus harten Werkstoff PVC plastische Eigenschaften, wie insbesondere eine wünschenswerte Nachgiebigkeit, verleiht. Die Weichmacher lagern sich bei der thermoplastischen Bearbeitung zwischen den Molekülketten des PVCs ein und lockern damit deren Gefüge.

Ein für Weich-PVC wichtiger Faktor ist die Gelierung des PVC-Materials. Diese hat entscheidende Auswirkungen auf dessen mechanische Eigenschaften sowie dessen Schweißbarkeit. Die Gelierung beginnt typischerweise bei Temperaturen über 130 °C in Anwesenheit von PVC und Weichmachern und ist in der Regel bei Temperaturen um über 190°C abgeschlossen, bei denen ein Gelierungsgrad von 100% erreicht wird. So nehmen beispielsweise die Zugfestigkeit und Bruchdehnung mit zunehmendem Gelierungsgrad zu. Für technisch verwendbare PVC-Produkte ist ein Gelierungsgrad im Bereich von 10 bis 50% ungünstig, da dies zu relativ schlechten mechanischen Eigenschaften führt, die sich für die meisten Anwendungen nicht eignen. Ein Gelierungsgrad im Bereich von 60% und mehr liefert hingegen mechanische Eigenschaften, die als brauchbar angesehen werden. Andererseits darf der Gelierungsgrad nicht zu hoch sein. So verbessern sich zwar die mechanischen Eigenschaften bei Gelierungsgraden von über 95% weiterhin, der hohe Gelierungsgrad führt aber zu Problemen mit der Schweißbarkeit des Materials. So ist PVC mit einem Gelierungsgrad von über 100% nicht mehr schweißbar, d.h., eine Bearbeitung kann nur noch bei Temperaturen erfolgen, die zu einer thermischen Beschädigung und einem Abbau des Materials führen. Bei PVC-Halbfabrikaten wird in der Regel ein niedrigerer Gelierungsgrad eingestellt, da die für das Endprodukt erforderliche höhere Gelierung während der Produktion des Endprodukts eingestellt wird.

Die Gelierung hängt von der Verarbeitungstemperatur und der Zeit, die das Material dieser Temperatur ausgesetzt ist, ab. Der wesentliche Faktor ist hier die Temperatur. Zu beachten ist zudem, dass die Gelierung nicht reversibel ist. Der Gelierungsgrad von PVC wird somit wesentlich von der höchsten Temperatur während der Verarbeitung des Materials bestimmt. Normale Weich-PVC-Materialien werden gewöhnlich bei einer Temperatur zwischen 170 und 190° verarbeitet, was zu einem Gelierungsgrad im Bereich von 70 bis 100%, und einer guten Balance von mechanischen Eigenschaften und Schweißbarkeit führt.

Heutzutage werden Weich-PVC Halbfabrikate in der Regel über Zwischenstufen, beispielsweise mittels "Dry Blend" (d.h., einer speziellen Mischung von PVC-Pulver) hergestellt.

Herstellung von PVC-"Dry Blends":
In diesem Verfahren werden PVC, Additive, Verarbeitungshilfsstoffe, Füllstoffe und Weichmacher in einem Hochgeschwindigkeitsmischer auf Temperaturen von etwa 100 bis 120°C erhitzt. Gemäß diesem Verfahren wird ein homogenes, trockenes und mehr oder weniger fließfähiges Pulver erhalten. Das Endprodukt ist auf dieser Stufe nicht geliert (Gelierungsgrad etwa 0%) und wird als Zwischenprodukt für die folgenden Verfahren A und B eingesetzt.

### A) Herstellung von partiell gelierten Pellets

Dazu wird das "Dry Blend"-Produkt in einen Extruder gegeben, unter Bildung einer homogenen Schmelze erhitzt und dann zu einem Granulat oder Pellets gleichmäßiger Größe geformt. Während des Erhitzens liegt die Temperatur in der Regel zwischen 140 und 160°C, so dass ein Gelierungsgrad von unter 100% erreicht wird. Die so hergestellten Pellets entsprechen einem Halbfabrikat.

Für die Verarbeitung zum Endprodukt werden die hergestellten Pellets anschließend in einen Extruder gegeben, erhitzt und in eine gewünschte Form extrudiert.

### B) Verarbeitung des Dry-Blends

Das Dry Blend-Material kann auch direkt zum Endprodukt weiterverarbeitet werden, indem es einem Extruder zugeführt und unter Schmelzen auf 170 bis 190°C erhitzt und durch eine Düse zur Herstellung einer flachen Bahn oder eine Profildüse unter Ausbildung eines Profils gedrückt wird. Diese Vorgehensweise hat aber den Nachteil, dass der Dry Blend in Form eines Pulvers mit einem Gelierungsgrad von 0 % vorliegt, was zu Nachteilen in der späteren Verarbeitung führt. So kann ein Pulver bei der Lagerung und dem Transport verklumpen. Zudem muss ein Pulver für die weitere Verabeitung entgast werden, was zu höheren Produktionskosten führt. Diese Nachteile können durch die Verarbeitung von einem Granulat vermieden werden.

Den vorbeschriebenen Verfahren ist gemein, dass durch das teilweise mehrfache Erhitzen und Abkühlen ein relativ hoher Energieaufwand erforderlich ist, um die gewünschten Eigenschaften insbesondere in Bezug auf die Bruchdehnung und Zugfestigkeit einzustellen. So ist allein für die Herstellung des Dry Blends ein Energieeintrag, gemessen anhand des SEI-Werts (Specific Energy Input), von zwischen 0,05 und 0,10 kW*h/kg erforderlich. Die Weiterverarbeitung des hergestellten Dry Blends zu Halbfabrikaten erfordert einen weiteren Energieeintrag im Bereich von 0,06 bis 0,15 kW*h/kg, so dass in der Gesamtbilanz ein Energieeintrag im Bereich von mindestens 0,11 kW*h/kg erforderlich ist.

Ziel und Aufgabe der vorliegenden Erfindung war es demzufolge, die Nachteile des Standes der Technik zu überwinden und ein Verfahren zur Verfügung zu stellen, das unter möglichst geringem Energieaufwand die Herstellung eines Weich-PVC-Halbfabrikats ermöglicht, das in Form eines Granulats bereitgestellt werden kann. Es soll ein möglichst gleichmäßiges Granulat bereitgestellt werden, das ein gleichmäßiges Fördervolumen des Extruders für die Herstellung des Fertigfabrikats ermöglicht. Darüber hinaus soll sich das Weich-PVC-Halbfabrikat einfach und schnell herstellen lassen, wobei möglichst nur ein einziger Verarbeitungsschritt erforderlich sein soll. Schließlich soll der für dieses Verfahren erforderliche Energieeintrag möglichst gering sein, um die Wirtschaftlichkeit gegenüber den heute verfügbaren Verfahren zu verbessern.

Erfindungsgemäß wurde gefunden, dass dieses Ziel mit einem Verfahren zur Extrusion einer homogenen Polymerzusammensetzung, die einen Gelierungsgrad von 5 bis 80%, eine Bruchdehnung von 0 bis 270% und eine Zugfestigkeit von mindestens 1 N/mm² aufweist, aus einem nicht-compoundierten Polyvinylchlorid, das dadurch gekennzeichnet ist, dass das Verfahren einen spezifischen Energieeintrag (SEI) von 0,03 bis 0,09 kWh/kg, insbesondere 0,05 bis 0,08 kWh/kg aufweist, erreicht wird. Besonders bevorzugt weist das Verfahren einen spezifischen Energieeintrag (SEI) von 0,06 bis 0,07 kWh/kg auf (in Abhängigkeit von der Viskosität der Formulierung).

Der extrudierte homogene Polymerzusammensetzung weist einen Gelierungsgrad von 5 bis 80%, vorzugsweise 30 bis 60% und besonders bevorzugt von 40 bis 50% auf. Die Bruchdehnung der extrudierten homogenen Polymerzusammensetzung kann 0 bis 270%,bevorzugt 20 bis 250%,insbesondere bevorzugt 50 bis 200% und besonders bevorzugt 100 bis 150% betragen. Ferner beträgt die Zugfestigkeit der extrudierten homogenen Polymerzusammensetzung mindestens 1 N/mm², bevorzugt mindestens 2 N/mm², vorzugsweise 2.5 bis 13 N/mm², insbesondere bevorzugt 5 bis 10 N/mm², am meisten bevorzugt 6 bis 9 N/mm².

Durch das erfindungsgemäße Verfahren kann die homogene Polymerzusammensetzung aus nicht-compoundiertem Polyvinylchlorid in einem Verfahrensschritt in ein Granulat mit einem gewissen Gelierungsgrad erhalten werden. Dadurch wird ein gleichmäßigeres Granulat mit einheitlicheren Schüttdichten erhalten. Der Vorteil dieser Gelierungsgrade liegt in einem vorteilhaften Verarbeitungsverhalten im Extruder. Dies äußert sich nicht in den mechanischen Eigenschaften des daraus extrudierten Fertigprodukts, jedoch in einer einheitlicheren Dicke der daraus hergestellten Profile oder Membranen.

Ein weiterer Vorteil dieses Verfahrens gegenüber dem Stand der Technik liegt ferner in einem höheren Durchsatz des Extruders, wodurch die Herstellungskosten verringert werden. Weiter kann der Weichmacher bei bzw. mit höheren Temperaturen zugegeben werden, was die Aufnahme des Weichmachers in PVC verbessert und den Durchsatz erhöht. Bei Erhöhung der Temperatur erfolgt ein exponentieller Anstieg der Aufnahme des Weichmachers, wenn die Temperatur bei oder über der Tg des Weichmachers liegt.

Die aus dem erfindungsgemäßen Verfahren erhaltene extrudierte homogene Polymerzusammensetzung liegt vorzugsweise als Granulat vor. Granulat schließt hier auch granulierte Formen wie Pellets oder Perlen ein. Die aus dem erfindungsgemäßen Verfahren erhaltene extrudierte homogene Polymerzusammensetzung stellt ein PVC-Halbfabrikat dar. Das erhaltene Halbfabrikat kann zur Herstellung unterschiedlicher PVC-Produkte, wie flache Bahnen, Platten, Profile, etc., verwendet werden.

Unter "nicht-compoundiertem Polyvinylchlorid" ist im Rahmen der vorliegenden Erfindung Roh-PVC (d.h. das direkt aus der Polymerisation von Vinylchlorid erhältliche Produkt) zu verstehen. Dieses kann zwar beispielsweise mit einem stabilisierenden Additiv physikalisch vermischt sein, es wird aber im Gegensatz zu compoundiertem Polyvinylchlorid nicht thermisch behandelt, um die Aufnahme von beispielsweise stabilisierendem Additiv oder Weichmacher zu ermöglichen.

"Homogene Polymerzusammensetzungen" umfassen im Rahmen der Erfindung Zusammensetzungen, in denen die Einzelbestandteile im Wesentlichen homogen verteilt sind. Dem Fachmann ist ohne weiteres klar, dass sich in Polymerzusammensetzungen Bereiche bilden können, die einen geringfügig höheren Anteil eines Bestandteils aufweisen als andere Bereiche, und dass eine 100 %ig homogene Verteilung aller Bestandteile in der Regel nicht erreicht werden kann. Auch solche Zusammensetzungen mit "nicht perfekter" Verteilung sollen aber vom Begriff "homogene Polymerzusammensetzung" gemäß der vorliegenden Erfindung erfasst sein.

Die Zugfestigkeit und Bruchdehnung bestimmt sich im Rahmen der vorliegenden Erfindung gemäß der DIN EN 12311-2; Verfahren B. Der Gelierungsgrad bestimmt sich im Rahmen der vorliegenden Erfindung mit Hilfe eines DSC 821e (Mettler-Toledo) nach der Methode von Potente H. Determination of the Degree of Gelation of PVC with DSC, Kunststoff-German Plastics, 1987, 77 (4), S. 401-404. Dazu wurde pro Messung 10 mg Material mit einer Heizrate von 20°C/min von 25 auf 220°C aufgeheizt. Der Anteil des bei tieferen Temperaturen auftretenden Schmelzendotherms zur Summe beider Schmelzendotherme wird dann als "Gelierungsgrad" in Prozent angegeben. Zu diesem Bestimmungsverfahren ist anzumerken, dass sich damit nur Gelierungsgrade von bis zu 100 % bestimmen lassen. Von einer Übergelierung (Gelierungsgrad > 100%) spricht man in Fällen, in denen das PVC über etwa 185 °C erhitzt wurde (beispielsweise für mehr als 1 min bei 195°C). Bei diesen Temperaturen nimmt die Reißfestigkeit des Materials zwar weiter zu, es kommt aber zu einer Abnahme der Reißdehnung. Zudem macht sich eine Übergelierung dadurch bemerkbar, dass das Material nicht mehr verschweissbar ist.

Das erfindungsgemäße Verfahren lässt sich beispielsweise realisieren, indem die Zugabe des Weichmachers zum PVC in zwei Portionen erfolgt, die zeitlich versetzt zueinander zugegeben werden, und indem, gegebenenfalls mit Ausnahme von das PVC stabilisierenden Additiven, feste Bestandteile, wie Füllstoffe, Farbstoffe oder Farbpigmente, erst zu einem Zeitpunkt zu dem PVC gegeben werden, an dem der wesentliche Anteil des Weichmacher dem PVC zugegeben und von diesem aufgenommen wurde.

Ein wichtiges Merkmal dieser Ausführungsform der vorliegenden Erfindung ist es demzufolge, dass feste Bestandteile erst zu einem Zeitpunkt in das Polyvinylchlorid eingemischt werden, an dem zumindest ein Großteil des Weichmachers mit dem Polyvinylchlorid vermischt und von diesem absorbiert wurde. Überraschend wurde gefunden, dass diese Verfahrensführung zu einer wesentlichen Verbesserung der mechanischen Eigenschaften, wie insbesondere der Zugfestigkeit und Bruchdehnung, und zu einer Verbesserung der thermischen Reststabilität führt.

Die mit dem erfindungsgemäßen Verfahren hergestellten PVC-Halbfabrikate weisen bevorzugt eine thermische Reststabilität von mindestens 90 Minuten, insbesondere von mindestens 100 Minuten und besonders bevorzugt von mindestens 105 Minuten auf. Unter der thermischen Reststabilität versteht man die Zeitspanne, innerhalb der das Weich-PVC-Compound bei einer Temperatur von 180°C noch keine Zersetzung unter Abspaltung von HCI zeigt. Die thermische Reststabilität ist damit ein Maß für die Stabilität des Materials unter thermischer Belastung, und wurde anhand der DIN 53 381-1 bestimmt.

In einer bevorzugten Ausführungsform betrifft das erfindungsgemäße Verfahren
die Herstellung einer Polymerzusammensetzung, die im Wesentlichen besteht aus
(A) 30 bis 80 Gew.-% Polyvinylchlorid,
(B) 0,5 - 5 Gew.-% eines stabilisierenden Additivs,
(C) 0 - 40 Gew.-% eines festen Bestandteils, und
(D) 5 - 40 Gew.-% eines bei Raumtemperatur flüssigen Weichmachers für das Polyvinylchlorid,
wobei sich die Angaben in Gew.-% jeweils auf das Gesamtgewicht der Polymerzusammensetzung beziehen, und
wobei das Verfahren die Schritte
(I) Einspeisen von Polyvinylchlorid (A) in nicht kompoundierter Form in eine Extrusionsvorrichtung mit mindestens einem Rotor, der mindestens drei Knet- und/oder Mischzonen aufweist und in der Lage ist, die Mischung sowohl zu transportierten als auch zu mischen,
(II) Einspeisen des Polyvinylchlorids (A) und stabilisierendem Additiv (B) in die Extrusionsvorrichtung durch einen ersten Einlass, der in der Nähe der Antriebseinheit und neben einem ersten fördernden Segmentabschnitt des mindestens einen Rotors angeordnet ist;
(III) Einspeisen des Weichmachers zum mit dem stabilisierenden Additiv vermischten Polyvinylchlorid durch mindestens zwei voneinander beabstandete Einlasse, wobei der Weichmacher in mindestens zwei Portionen von jeweils etwa 20-80 Gew-%, bezogen auf das Gesamtgewicht des Weichmachers, zum Polyvinylchlorid zugegeben wird, und zwischen der Zugabe der einzelnen Portionen eine Knet- und/oder Mischzone angeordnet ist,
(IV) Bearbeiten des Weichmacher/Polyvinylchlorid Gemischs bei einer Temperatur um oder oberhalb der Glasübergangstemperatur des Polyvinylchlorids, wobei die Temperatur des Gemischs 150°C nicht übersteigt bis der Weichmacher im Wesentlichen vollständig in das Polyvinylchlorid eingearbeitet wurde.
(V) gegebenenfalls Einspeisen des festen Bestandteils (D) zum mit dem Weichmacher vermischten Polyvinylchlorid in einem Abschnitt, an dem mindestens 80 Gew.-% der Gesamtmenge des Weichmachers in das Polyvinylchlorid eingearbeitet wurden,
(VI) gegebenenfalls Entgasen und Extrudieren der Mischung durch die Extrusionsdüse,

### umfasst.

Die Bestandteile A und B können im Schritt (II) in nicht vermischter Form dem Extruder zugeführt werden. Aus Gründen der Zweckmäßigkeit können die Komponenten A und B jedoch auch vor der Zugabe in den Extruder ohne Wärmezufuhr miteinander vermischt werden, was nur einen marginalen Einfluss auf die gesamte Energiebilanz des Verfahrens hat. In diesem Fall ist die Komponente (B) bevorzugt ein bei 25 °C festes Material. Bei einem bei 25 °C flüssigen Stabilisator würde sich bei Mischung mit dem PVC auf den PVC-Partikeln eine Beschichtung mit dem Additiv bilden, was die Partikel klebrig macht. Dies kann zu Problemen bei der weiteren Verarbeitung des Materials führen.

Alternativ ist es möglich, wenn auch weniger bevorzugt, das stabilisierende Additiv zu einem späteren Zeitpunkt zuzugeben, beispielsweise zusammen mit dem Weichmacher im Schritt (III) zum PVC zu geben. In diesem Fall ist das stabilisierende Additiv vorzugsweise flüssig.

Die in Schritt (IV) erwähnte Glasübergangstemperatur (Tg) sowie sämtliche Glasübergangstemperaturen sind im Rahmen der vorliegenden Erfindung mit Hilfe von DSC (Differential Scanning Calorimetry) zu bestimmen.

Für die Herstellung von Halbfabrikaten gemäß der vorliegenden Erfindung ist noch anzumerken, dass das Weichmacher-haltige Produkt (d.h. das aus dem Schritt IV erhaltene Produkt) vor der Extrusion zur einem Granulat oder zu Pellets nicht mehr erheblich erhitzt werden sollte, damit eine zu starke Erhöhung des Gelierungsgrades unterbunden wird. So sollte das Produkt nicht auf Temperaturen von mehr als 190 °C, vorzugsweise 180 °C erhitzt werden, um die Einstellunng eines Gelierungsgrad von 5 bis 80% sicherzustellen.

Als Ausgangsmaterial (A) für die Polymerzusammensetzung kann jedes übliche, nicht-compoundierte, zur Herstellung von compoundiertem PVC geeignete Polyvinylchlorid verwendet werden. Nicht-compoundiertes PVC ist ein kommerzielles, teilchenförmiges Erzeugnis und kann von verschiedenen Herstellern bezogen werden. Der Ausdruck "teilchenförmig" bezieht sich auf jede feste Form von PVC, wobei pulverförmige, kompaktierte, partikelförmige und granulierte Formen, wie zum Beispiel Pellets oder Perlen, eingeschlossen sind. Die unteren und oberen Grenzen von 30 und 80 Gew.-% gelten insoweit als kritisch, als dass bei weniger als etwa 30 Gew.-% polymerem PVC die Qualität des Endprodukts nicht akzeptabel wäre, während ein Anteil von über 80 Gew.-% zu einem Weichmacheranteil führen würde, der für die Herstellung von weichem PVC nicht ausreichend ist. In einer bevorzugten Ausführungsform handelt es sich bei dem in das Verfahren einzubeziehenden Polyvinylchlorid um durch Suspensionspolymerisation hergestelltes Polyvinylchlorid (auch als S-PVC bezeichnet). Gegenüber Polyvinylchlorid, dass durch Suspensionspolymerisation hergestellt wurde, ist es bei Polyvinylchlorid, dass durch Emulsionspolymerisation hergestellt wurde (auch als E-PVC bezeichnet), schwieriger, Produkte mit geeigneten Eigenschaften herzustellen. Demzufolge ist das in das Verfahren einzubeziehende Polyvinylchlorid vorzugsweise kein E-PVC.

Als PVC-stabilisierendes Additiv (B) können im erfindungsgemäßen Verfahren kommerziell erhältliche, geeignete und bekannte Zusammensetzungen oder Mischungen verwendet werden. Ein Minimum von etwa 0,5 Gew.-% gilt als kritisch, da unter diesem Wert kommerzielle stabilisierende Additive oder Mischungen solcher Additive keine ausreichend langzeitstabilisierende Wirkung vermitteln. Bei mehr als 5 Gew.-% der Gesamtzusammensetzung stellen sich hingegen keine zusätzlichen stabilisierenden Vorteile ein, während andere Produkteigenschaften wie z.B. Optik und Mechanik, leiden können. Bevorzugte stabilisierende Additive sind anorganische Schwermetallsalze, Metallseifen, insbesondere von Barium, Blei, Zink oder Calcium, sowie Dibutylzinn- und Dioctylzinn-Verbindungen und epoxidiertes Sojaöl. Besonders bevorzugt sind Kalzium/Zink-Stabilisatoren oder Barium/Zink-Stabilisatoren, die dem Fachmann ohne Weiteres geläufig sind. Das stabilisierende Additiv kann bei 25 °C flüssig oder fest sein, wobei fest bevorzugt ist.

Neben PVC und einem stabilisierenden Additiv enthalten die erfindungsgemäß zu verarbeitenden Polymerzusammensetzungen vorzugsweise 0 bis 40 Gew.- %, besonders bevorzugt 0,01 bis 35 Gew.-%, und am meisten bevorzugt etwa 0,3 bis 30 Gew.-% eines festen Bestandteils (C). Ein fester Bestandteil ist im Rahmen der Erfindung dadurch charakterisiert, dass er sich im PVC nicht löst, sondern einen partikulären Bestandteil bildet. Zu solchen festen Bestandteilen zählen insbesondere Füllstoffe, Farbstoffe und Farbpigmente. Bevorzugt umfasst der feste Bestandteil Füllstoffe, insbesondere mineralische Füllstoffe, und gegebenenfalls Farbpigmente. Im Zusammenhang mit der vorliegenden Erfindung besonders geeignete Füllstoffe sind Kaolin und Calciumcarbonat. Besonders bevorzugte Farbpigmente sind Russ und Titandioxid.

Ein weiterer wichtiger Bestandteil der Polymerzusammensetzungen, die gemäß dem hier geschilderten Verfahren herstellbar sind, ist ein flüssiger Weichmacher (D). Der Gehalt des flüssigen Weichmachers in der Polymerzusammensetzung liegt zweckmäßig bei etwa 5 bis 40 Gew.-%, insbesondere bei etwa 15 bis 40 Gew.-% und besonders bevorzugt bei etwa 20 bis 40 Gew.-%. Wie dem Fachmann geläufig ist, ist die Menge des in das Polyvinylchlorid eingebrachten Weichmachers abhängig von den beabsichtigten Anwendungseigenschaften. So ist ein geringerer Anteil an Weichmacher für die Herstellung eines relativ festen PVCs ausreichend, während für die Herstellung von weichen Polyvinylchloriden, insbesondere solchen, die anschließend schweißbar sind, ein höherer Anteil von Weichmacher erforderlich ist.

Im Zusammenhang mit Polyvinylchlorid geeignete Weichmacher sind insbesondere flüssige Weichmacher wie hochsiedende Ester einer Säure, bevorzugt von Terephthalsäure oder Adipinsäure und ein oder mehreren Alkoholen, wie Butanol oder Alkanolen mit 8 bis 12 Kohlenstoffatomen. Besonders geeignete Weichmacher sind im Rahmen der vorliegenden Erfindung Dioctylphthalat (DOP), Diisononylphthalat (DINP), Diisodecylphthalat (DIDP) und Dioctyladipat (DOA).

Wie bereits vorstehend angemerkt besteht die PVC-Zusammensetzung im Wesentlichen aus den Bestandteilen (A) bis (D). "Im Wesentlichen" ist jedoch so zu verstehen, dass die Zusammensetzung nicht notwendig ausschliesslich aus diesen Bestandteilen besteht, sondern daneben noch geringe Anteile an zusätzlichen Bestandteilen, wie übliche PVC-Zusätze, insbesondere in Form von Flammhemmern, Gleitmitteln, UV-Absorbern, Treibmitteln, Haftvermittlern, Antistatika, Fungizide oder Schlagzähigkeitsmodifikatoren, enthalten kann. Es ist auch möglich, eine geringe Menge eines zweiten Polymerbestandteiles, wie z.B. ein PVC-kompatibles (z.B. halogeniertes) auf Polyethylen oder Acrylsäure basierendes Polymer, beizumischen. In so einem Fall wird dieser Bestandteil zusammen mit dem teilchenförmigen PVC erneut ohne signifikantes Vormischen in den Hohlraum eingespeist. Es ist jedoch bevorzugt, wenn diese Bestandteile zusammen nicht mehr als etwa 10 Gew.-%, insbesondere nicht mehr als etwa 8 Gew.-% und besonders bevorzugt nicht mehr als etwa 5 Gew.-% bezogen auf das Gesamtgewicht der PVC-Zusammensetzung ausmachen.

Eine für das erfindungsgemäße Verfahren besonders geeignete Vorrichtung ist eine Extrusionsvorrichtung, die ein Paar von im Wesentlichen isomorphen, länglichen Rotoren, die in den Hohlraum passen und zur interpenetrierenden Bewegung nebeneinander angeordnet sind, aufweist. Ein Paar bezeichnet die Anzahl "zwei". Eine solche Extrusionsvorrichtung wird auch als Doppelschneckenextruder bezeichnet. Eine besonders bevorzugte Extrusionsvorrichtung ist ein gleichsinnig drehender dichtkämmender Doppelschneckenextruder.

Die Rotoren sind "interpenetrierend" in dem Sinne, dass ein Vorsprung an einem der Rotoren an einem gegebenen Ort der Längs- und Drehposition mit einer Aussparung am anderen Rotor in der entsprechenden Lage zusammenwirkt, so dass im allgemeinen der Abstand zwischen den Rotoren an jedem Punkt zwischen ihnen längs der Länge des Hohlraums im Wesentlichen konstant bleibt. Die Verwendung von Rotoren mit sowohl fördernden als auch knetenden und/oder mischenden Teilabschnitten ist an sich bekannt und wird in der EP 0 426 619 näher erläutert. Zu den knetenden und oder mischenden Teilabschnitten ist anzumerken, dass im Bereich der Extrudertechnologie keine scharfe Abgrenzung zwischen solchen Abschnitten existiert, da ein Mischen immer auch einen Anteil an Kneten und ein Kneten immer auch einen Anteil an Mischen beinhaltet. Aus diesem Grund werden die Ausdrücke "kneten" und "mischen" in der vorliegenden Anmeldung synonym verwendet.

Der in dem erfindungsgemäßen Verfahren verwendete mindestens eine Rotor, bevorzugt mehrere Rotoren, bilden vorzugsweise (i) einen ersten fördernden Segmentabschnitt neben dem mit dem Antrieb der Extrusionsvorrichtung verbundenen Ende des Rotors/der Rotoren; (ii) einen ersten mischenden Abschnitt stromabwärts von und neben dem ersten fördernden Segmentabschnitt; (iii) einen zweiten fördernden Segmentabschnitt stromabwärts von und neben dem ersten mischenden Segmentabschnitt; (iv) einen zweiten mischenden Segmentabschnitt stromabwärts von und neben dem zweiten fördernden Segmentabschnitt; (v) einen dritten fördernden Abschnitt stromabwärts von und neben dem zweiten mischenden Segmentabschnitt. Außerdem haben die Rotoren vorzugsweise (vi) einen dritten mischenden Segmentabschnitt stromabwärts von und neben dem dritten fördernden Segmentabschnitt und (vii) einen vierten fördernden Segmentabschnitt stromabwärts von und neben dem dritten mischenden Segmentabschnitt.

Der hier verwendete Begriff "stromabwärts" bezieht sich auf einen Ort längs der Länge des Rotors, der näher am Extrusionsende der Extrusionsvorrichtung liegt, als der in Verbindung mit dem Ausdruck "stromabwärts" erwähnte Bezugsort.

Der vierte fördernde Segmentabschnitt ist im Allgemeinen neben dem Extrusionsende der Extrusionsvorrichtung angeordnet, d.h. dem Ende, das mit einer Extrusionsdüse üblicher, von der Form des zu erzeugenden Produktes abhängiger Bauweise bestückt ist. Zur Erzeugung des nötigen Druckes kann es, vor allem bei größeren Anlagen, sinnvoll sein, eine Schmelzepumpe zwischen dem Extruder und der Extrusionsdüse einzubauen, um ein Überhitzen des Polymers zu verhindern.

Für einen Doppelschneckenextruder ist es bevorzugt, wenn jeder der Rotoren eine Länge L im Bereich des 32 bis 60-fachen, bevorzugt des 36 bis 52-fachen seines Durchmessers D aufweist. Für ein Verfahren unter Verwendung eines Doppelschnecken-Extruders ist es weiterhin bevorzugt, wenn eine erste Portion Weichmacher bei einem L/D-Verhältnis im Bereich von 1 bis 8 und eine zweite Portion Weichmacher bei einem L/D-Verhältnis von etwa 10 bis 20 zugegeben wird. Das L/D Verhältnis ist hierbei ein Mass für die Position, bezogen auf die Gesamtlänge des Rotors, an dem die Zugabe erfolgen soll.

Das erfindungsgemäße Verfahren ist nicht auf die Verwendung von Doppelschneckenextrudern beschränkt. Das Verfahren kann ebenso gut mit anderen Extrusionsvorrichtung, wie beispielsweise einem Planetenwalzenextruder, einem Ringextruder, einem Mehrwellenextruder oder einem Buss-Kneter, durchgeführt werden. Bei Verwendung dieser Extrusionsvorrichtungen ist die Geometrie der Zugabe insbesondere des Weichmachers entsprechend anzupassen.

Für das erfindungsgemäße Verfahren ist es, wie vorstehend bereits erläutert, zweckmäßig, dass ein möglichst großer Anteil des Weichmachers in das Polyvinylchlorid eingearbeitet wurde, bevor ein fester Bestandteil, wie beispielsweise ein Füllstoff der Mischung zugegeben wird. So ist es besonders bevorzugt, wenn der feste Bestandteil, bevorzugt sämtliche festen Bestandteile, erst zu einem Zeitpunkt zum mit dem Weichmacher vermischten Polyvinylchlorid zugegeben werden, an dem mindestens 90 Gew.-%, bevorzugt mindestens 95 Gew.-% und insbesondere mindestens 99 Gew.-% des Weichmachers in das Polyvinylchlorid eingeknetet wurden. Weiterhin ist es bevorzugt, wenn dem Polyvinylchlorid im Schritt (V) mindestens 80 Gew.-%, bevorzugt mindestens 95 Gew.-%, und besonders bevorzugt mindestens 99 Gew.-% der Gesamtmenge der festen Bestandteile, d.h., der in die Zusammensetzung einzubeziehenden, gegebenenfalls mineralischen Füllstoffe, Pigmente und Farbstoffe, zugegeben wird. Am meisten bevorzugt ist es, wenn sämtliche festen Bestandteile erst dann mit dem PVC vermischt werden, wenn der Weichmacher vollständig in das Polyvinylchlorid eingearbeitet wurde.

Für das erfindungsgemäße Verfahren ist es weiterhin bevorzugt, wenn die Temperatur des Weichmachers für das Vermischen mit dem Polyvinylchlorid auf mindestens 30° C unter der Glasübergangstemperatur (Tg) des Polyvinylchlorids, bevorzugt mindestens 15°C unterhalb der Tg des Polyvinylchlorids und besonders bevorzugt auf die Tg oder oberhalb der Tg des Polyvinylchlorids, eingestellt wird. Ursache hierfür ist, dass der Weichmacher im Bereich ab bzw. oberhalb der Glasübergangstemperatur des Polyvinylchlorids besonders gut von diesem aufgenommen wird, und dass das Polyvinylchlorid im Bereich seiner Übergangstemperatur ausreichend erweicht ist, so dass es sich gut mit dem Weichmacher vermischen kann. Die Mittel mit denen diese Temperatur erreicht wird, sind für die Erfindung aber nicht entscheidend. So kann die Temperatur beispielsweise durch Erhitzen des Weichmachers vor dem Einspeisen, durch Wärmetauscher erfolgen. Ebenso ist es möglich, das PVC durch Verwendung von Schüttgutwärmetauschern vorzuheizen.

Im Zusammenhang mit der vorliegenden Erfindung hat es sich als zweckmäßig herausgestellt, wenn die durch die Extrusionsvorrichtung eingebrachte Energiemenge sowohl in Form mechanischer Energie (durch die Schnecke) als auch in Form von thermischer Energie, bevorzugt durch Heizelemente, bereitgestellt wird. In diesem Fall kann das PVC bei Raumtemperatur dosiert werden, während der Weichmacher bevorzugt auf eine Temperatur oberhalb, aber nicht zwingend, der Glasübergangstemperatur vorgewärmt wird.

Weist die Extrusionsvorrichtung Heizelemente auf, so ist es bevorzugt, wenn diese auf eine Temperatur von mindestens 100°C, bevorzugt mindestens 120°C eingestellt werden. Andererseits sollte die Temperatur der Heizelemente nicht zu hoch sein, damit die Gelierung des Produkts einen Wert von 80 % nicht übersteigt. Vorzugsweise beträgt die Temperatur der Heizelemente daher nicht mehr als 160°C, insbesondere nicht mehr als 150°C.

Andererseits ist es im Rahmen der vorliegenden Erfindung bevorzugt, wenn die Temperatur für das Vermischen von Polyvinylchlorid und dem Weichmacher nicht so weit über der Glasübergangstemperatur des Polyvinylchlorids liegt, damit es zu keiner vorzeitigen Gelierung des Polyvinylchlorids kommt. So ist es bevorzugt, wenn die Temperatur beim Vermischen des Weichmachers mit dem Polyvinylchlorid, insbesondere für das Einmischen der ersten Portion des Weichmachers bei vorzugsweise nicht mehr als 50°C über der Glasübergangstemperatur des Polyvinylchlorids, bevorzugt nicht mehr als 40°C oberhalb der Glasübergangstemperatur des Polyvinylchlorids, und besonders bevorzugt nicht mehr als 35°C oberhalb des Tg des Polyvinylchlorids liegt. Eine Zudosierung von Weichmacher mit Temperaturen unterhalb der Tg des PVC's ist ebenfalls möglich.

Wie im Vorstehenden bereits erläutert wurde, ist es für das Verfahren gemäß der vorliegenden Erfindung sehr vorteilhaft, wenn der Weichmacher in mindestens zwei Portionen zum Polyvinylchlorid zugegeben wird. Ursache hierfür ist es, dass beobachtet wurde, dass bei einer Zugabe von zu großen Mengen an Weichmachern keine sinnvolle Vermischung des Weichmachers und des Polyvinylchlorids möglich ist, da der Weichmacher nicht schnell genug durch das Polyvinylchlorid aufgenommen werden kann. Im Zusammenhang mit dem Schritt (III), in dem das Einmischen des Weichmachers in das Polyvinylchlorid beschrieben wird, ist es demzufolge bevorzugt, wenn die einzelnen Weichmacherportionen für das Einspeisen zum mit dem stabilisierenden Additiv vermischten Polyvinylchlorid etwa 30 bis 70 Gew.-%, bevorzugt etwa 40 bis 60 Gew.-%, bezogen auf das Gesamtgewicht des Weichmachers, ausmachen. Im Zusammenhang mit der vorliegenden Erfindung hat es sich als besonders günstig erwiesen, wenn die zuerst zugegebene Weichmacherportion etwa 55 ± 3 Gew.-%, und die danach zugegebene Weichmacherportion etwa 45 ± 3 Gew.-% der Menge des Weichmachers ausmacht.

Für die Misch- und/oder Knetzone, die die PVC-Zusammensetzung nach der ersten Zugabe des Weichmachers durchläuft, ist es weiterhin zweckmäßig, wenn diese so ausgelegt ist, dass der Weichmacher so mit dem Polyvinylchlorid vermischt werden kann, dass eine homogene Mischung gebildet wird, bevor eine zweite Portion Weichmacher zugegeben wird.

In Bezug auf den festen Bestandteil, insbesondere den Füllstoff, wurde vorstehend bereits angegeben, dass es sinnvoll ist, einen möglichst großen Anteil des festen Bestandteils, insbesondere des Füllstoffs, erst dann zum Polyvinylchlorid zuzugeben, wenn der Weichmacher im Wesentlichen vollständig in das Polyvinylchlorid eingearbeitet wurde. In diesem Zusammenhang ist es am meisten bevorzugt, wenn der feste Bestandteil, insbesondere der Füllstoff, erst dann in das Polyvinylchlorid eingearbeitet wird, nachdem der Weichmacher im Wesentlichen vollständig, d.h., zu mindestens 90 Gew.-%, bevorzugt zu mindestens 95 Gew.-%, und am meisten bevorzugt zu mindestens 99 Gew.-%, in das Polyvinylchlorid eingearbeitet wurde. Die vorstehenden Gewichtsangaben beziehen sich auf das Gewicht der Phase des Weichmachers und der separaten Phase des gegebenenfalls den Weichmacher enthaltenden PVC's.

Zum Erzeugen einer Gelierung bzw. eines Gelierungsgrads im Bereich von 5 bis 80%, bevorzugt 30 bis 60% und besonders bevorzugt 40 bis 55% ist es am Ende des vorstehend geschilderten Verfahrens zweckmäßig, dass das Polyvinylchlorid vor der Extrusion durch die Extrusionsdüse auf eine Produkttemperatur von mindestens 130°C bis maximal 170°C, bevorzugt 135 bis 155°C, und besonders bevorzugt 140 bis 150°C erhitzt wird. In diesem Temperaturbereich stellt sich, abhängig von der Zeit, die die PVC-Zusammensetzung dieser Temperatur ausgesetzt wird, der gewünschte Gelierungsgrad ein. In Bezug auf diese Temperaturen ist es jedoch bevorzugt, wenn die Zusammensetzung diesen Temperaturen erst dann ausgesetzt wird, wenn der Weichmacher im Wesentlichen vollständig, d.h. zu mindestens 95 Gew.-% bezogen auf die Gesamtmenge des Weichmachers, in das Polyvinylchlorid eingearbeitet wurde. Der Fachmann kann dem Vorstehenden entnehmen, dass der Gelierungsgrad vom Produkt der Temperatur und der Zeit abhängt, und ist ohne weiteres in der Lage, die Temperaturführung in der Extrusionsvorrichtung auf den beabsichtigten Gelierungsgrad abzustimmen.

In einer besonders bevorzugten Ausführungsform wird das erfindungsgemäße Verfahren auf einem gleichsinnig-rotierenden Doppelschneckenextruder mit einer Länge L von etwa dem 44-fachen seines Durchmessers D durchgeführt, wobei sich das Verfahren wie folgt gestaltet:
(i) Einspeisen von S-PVC und des stabilisierenden Additivs in eine Mischzone bei einem L/D-Verhältnis von 0 bis 4.
(ii) Zudosieren von flüssigem Weichmacher, wobei dieser eine Temperatur zwischen 20 und 120°C, vorzugsweise 60 bis 110°C, aufweist, bei einem L/D-Verhältnis von 4 bis 8.
(iii) Mischen und Verkneten des PVCs mit dem Weichmacher bei einem L/D-Verhältnis von 6 bis 16.
(iv) Zudosieren von flüssigem Weichmacher bei einer Temperatur des Weichmachers zwischen 20 und 160°C, vorzugsweise 60 bis 140°C, bei einem L/D-Verhältnis von 14 bis 20.
(v) Mischen und Verkneten des PVCs mit dem Weichmacher bei einem L/D-Verhältnis von 16 bis 24.
(vi) Zugabe von festen Bestandteilen, insbesondere Füllstoffen und Pigmenten, bevorzugt über eine Seitenzuführung, bei einem L/D-Verhältnis von 20 bis 28.
(vii) Dispergieren der festen Bestandteile und weiteres Erhitzen der PVC-Weichmachermischung bei einem L/D-Verhältnis von 24 bis 34.
(viii) Entgasen der Mischung unter Vakuum zur Bildung eines blasenfreien Produkts bei einem L/D-Verhältnis von 32 bis 36.
(ix) Aufbau von Druck für eine Extrusion der verarbeiteten Zusammensetzung bei einem L/D-Verhältnis von 36 bis 44.

Für grössere Verarbeitungsmaschinen ist der Einsatz einer Schmelzepumpe besonders vorteilhaft.

Eine bevorzugte Anwendung des erfindungsgemäßen Verfahrens ist die kontinuierliche Herstellung von Granulat bzw. Pellets.
Die Granulatherstellung kann beispielsweise durch Heissabschlaggranulierung oder durch Kaltgranulierung erfolgen.

Im Folgenden wird die vorliegende Erfindung anhand einiger Beispiele näher erläutert, die sich jedoch in keiner Weise eingrenzend auf den Schutzumfang der Anmeldung auswirken sollen.

### Beispiele

**Vergleichsbeispiel:** Dry-Blend und Extruder-Verfahren gemäß dem Stand der Technik

PVC kann in der Regel nicht ohne Weichmacher verarbeitet werden, ohne dass es zum thermischen Abbau des PVCs und damit zur Entstehung von Chlorwasserstoffsäure kommt. In einem ersten Schritt gemäß dem Verfahren zur Herstellung von "Dry Blends" gemäß dem Stand der Technik werden PVC, Weichmacher, Additive und Füllstoffe in eine einfache, mit hoher Geschwindigkeit betriebene Mischvorrichtung gegeben, die in der Lage ist, die Mischung durch Reibung zu erhitzen. Die Zusammensetzung besteht dazu aus 56 % eines Vorgemischs aus S-PVC und stabilisierenden Additiven, 35 % Weichmacher, und 9% Füllstoffen und Pigmenten. Mit Hilfe der Mischvorrichtung wird die Mischung auf 110 bis 120°C erhitzt und im Mischer behandelt, bis sich ein trockenes, frei fließendes Pulver gebildet hat. Innerhalb dieses Schrittes erfolgt die Migration des Weichmachers in das PVC Korn. Wichtig ist, dass hier die Weichmachermigration vollständig abgeschlossen ist. Eine unvollständige Migration verhindert bei der Verarbeitung das Erreichen guter mechanischer Werte. Der spezifische Energie-Eintrag (SEI; specific energy input), der für diesen Schritt erforderlich ist, beträgt zwischen 0,05 und 0,10 kWh/kg für die beschriebenen Dry Blends.

Nach dieser Behandlung wird das erhaltene Dry Blend in eine Kühlvorrichtung überführt und auf eine Temperatur von kleiner 40 °C abgekühlt.
Das so erhaltene Dry Blend wird anschließend einer Extrusionsvorrichtung zugeführt und durch Reibung oder Konvektion aufgeheizt, bis eine homogene und verarbeitbare Schmelze erhalten wird. Dies ist normalerweise bei Temperaturen von 160 bis 195°C der Fall. Die Schmelze wird dann entgast und extrudiert, um ein Granulat herzustellen. Für diesen Zweck wurden gängige Extrusionsvorrichtungen, wie ein Einschneckenextruder, ein gegenläufig rotierender Doppelschneckenextruder, ein gleichsinnig rotierender Doppelschneckenextruder, ein Buss-Kneter und ein Planetenrollenextruder eingesetzt. Für die Granulatherstellung aus dem Dry-Blend ist in Abhängigkeit von der eingesetzten Extrusionsvorrichtung ein SEI von etwa 0,06 bis 0,15 kWh/kg erforderlich. Insgesamt sind für die Herstellung von Granulat nach dem Stand der Technik daher SEI-Werte von 0,11 bis 0,25 kWh/kg nötig (SEI für Dry Blend + SEI für Granulatherstellung). Daraus ergibt sich, dass nach dem Stand der Technik durch die Zwischenstufe der Herstellung eines Dry-Blend ein Gesamtenergie-Eintrag (SEI) von mindestens 0,11 kWh/kg erforderlich ist, um ein Granulat herzustellen.

### Erfindungsgemäße Beispiele 1 bis 4:

In den erfindungsgemäßen Beispielen wurden die Bestandteile kontinuierlich und während der gesamten Durchführung des Experiments gemäß ihren entsprechenden Verhältnissen zugeführt, um ein Granulat herzustellen. Zur Vereinfachung der Versuche wurden jedoch das PVC sowie die stabilisierenden Additive kalt vorgemischt. Die separate Zugabe der Additive ist ohne weiteres durch Anpassung der Extrusionsvorrichtung möglich.

### Beispiel 1:

Der Zuführabschnitt wurde mit Wasser gekühlt, um ein Verstopfen zu verhindern. Alle Zylindertemperaturen wurden auf eine Temperatur von 120°C eingestellt. Die Schneckengeschwindigkeit wurde auf 180 Umdrehungen pro Minute eingestellt. Der Durchsatz betrug 15 kg/h. Als Extruder wurde ein corotierender Doppelschneckenextruder der Firma Berstorff ZE25A UT mit einem L/D-Verhältnis von 44 eingesetzt.

100% des mit dem stabilisierenden Additiv vermischten PVCs wurden im Zuführabschnitt des Extruders zugeführt. Dann wurden 58 Gew.-% des Phthalatweichmachers bei einer Temperatur von 80°C bei einem L/D-Verhältnis von 6 "stromabwärts" des Zuführbereichs für das PVC zugeführt. Die Mischung wurde dann gemischt, geknetet und weiter aufgeheizt. Anschließend wurden 42 Gew.-% des Phthalatweichmachers bei einem L/D-Verhältnis von 16 stromabwärts des Zuführbereichs zugegeben. Die PVC-Weichmachermischung wurde weiter gemischt, geknetet und aufgeheizt.

Stromabwärts zu der Mischung von PVC und Weichmacher wurden Füllstoffe und Pigmente bei einem L/D-Verhältnis von 24 zugeführt. Die Füllstoffe und Pigmente wurden durch Mischen und Kneten in das PVC eingearbeitet. Die fertige Mischung wurde dann durch Anlegen eines Vakuums von 100 mbar Absolutdruck bei einem L/D-Verhältnis von 36 stromabwärts des Zuführabschnitts entgast. Die letzten Abschnitte des Extruders sind zum Aufbau von Druck für die flache Extrusionsdüse ausgelegt. Die derart hergestellte Probe wies einen SEI von nur 0,075 kWh/kg, eine Bruchdehnung von 58% und eine Zugfestigkeit von 5,3 N/mm² auf. Der Gelierungsgrad betrug 37%.

### Beispiel 2

Die Durchführung von Beispiel 2 erfolgte analog Beispiel 1 mit dem Unterschied, dass die Temperatur der Zylinder auf 140 °C eingestellt wurde. Das derart produzierte Produkt hatte einen SEI von 0,075 kWh/kg, eine Bruchdehnung von 113% und eine Zugfestigkeit von 8,5 N/mm². Der Gelierungsgrad betrug 58%.

### Beispiele 3 und 4

Beispiele 3 und 4 wurden analog Beispiel 1 durchgeführt, mit den Unterschieden, dass die Schneckengeschwindigkeit des Extruders auf 210 bzw. 280 U/min eingestellt, der Durchsatz auf 18 kg/h eingestellt und dass die Füllstoffe und Pigmente bei dem L/D-Verhältnis von 20 zugegeben wurden. Die mit Hilfe dieses Verfahrens erhaltenen Produkte wiesen einen SEI von 0,076 bzw. 0,081 kWh/kg, eine Bruchdehnung von 132 bzw. 328% und eine Zugfestigkeit von 9,2 bzw. 14,5 N/mm² auf.

Die Zugfestigkeiten und Bruchdehnungen in den Beispielen wurden gemäß der DIN EN 12311-2; Verfahren B bestimmt. Der Gelierungsgrad wurde mit Hilfe eines DSC 821 e (Mettler-Toledo) nach der Methode von Potente H. Determination of the Degree of Gelation of PVC with DSC, Kunststoff-German Plastics, 1987, 77 (4), S. 401-404. Dazu wurde pro Messung 10 mg Material mit einer Heizrate von 20°C/min von 25 auf 220°C aufgeheizt. Der Anteil des bei tieferen Temperaturen auftretenden Schmelzendotherms zur Summe beider Schmelzendotherme wird dann als "Gelierungsgrad" in Prozent angegeben.

Zusätzlich zu den mechanischen Parametern wurde für die hergestellten PVC-Granulate auch die thermische Reststabilität bestimmt. Hierzu wurde auf die DIN 53 381-1 zurückgegriffen, wobei die Messungen bei 180 °C durchgeführt wurden.

Die Zusammensetzungen, Parameter und Ergebnisse der Untersuchung der vorbeschriebenen Beispiele sind in der folgenden Tabelle 1 dargestellt.

**Tabelle 1**

| Beispiel | PVC [kg] | Plast. 1 [kg/h] | Plast. 2 [kg/h] | Plast. Temperatur [°C] | Füllstoffe & Pigmente | Schneckengeschwindigk. [U/min] | Energie Verbrauch [kW] | T(max) [°C] | SEI [kWh/kg] | Mechanische Eigenschaften | | Gelierungsgrad [%] | Thermische Reststabilität [min] |
|---|---|---|---|---|---|---|---|---|---|---|---|---|---|
| | | | | | | | | | | Zugfestigkeit [N/mm²] | Bruchdehnung [%] | | |
| 1 | 8,47 | 3,0 | 2,21 | 80 | 1,32 | 180 | 1,4 | 138 | 0,075 | 5,3 | 58 | 37 | 125 |
| 2 | 8,47 | 3,0 | 2,21 | 80 | 1,32 | 180 | 1,4 | 154 | 0,075 | 8,5 | 113 | 58 | 105 |
| 3 | 10,17 | 3,6 | 2,7 | 80 | 1,58 | 210 | 1,7 | 156 | 0,076 | 9,2 | 132 | 68 | 105 |
| 4 | 10,17 | 3,6 | 2,7 | 80 | 1,58 | 280 | 1,9 | 164 | 0,081 | 14,5 | 328 | 76 | 145 |

## Patentansprüche

1. Verfahren zur Extrusion einer homogenen Polymerzusammensetzung, die einen Gelierungsgrad von 5 bis 80%, eine Bruchdehnung von 0 bis 270% und eine Zugfestigkeit von mindestens 1 N/mm² aufweist, aus einem nicht compoundierten Polyvinylchlorid, **dadurch gekennzeichnet, dass** innerhalb des Verfahrens eine Energiemenge, angegeben durch den spezifischen Energieeintrag (SEI), von 0,03 bis 0,09 kWh/kg, insbesondere 0,05 bis 0,08 kWh/kg in die Polymerzusammensetzung eingetragen wird.

2. Verfahren nach Anspruch 1, wobei die Polymerzusammensetzung im Wesentlichen besteht aus
(A) 30 bis 80 Gew.-% Polyvinylchlorid,
(B) 0,5 - 5 Gew.-% eines stabilisierenden Additivs,
(C) 0 - 40 Gew.-% eines festen Bestandteils, und
(D) 5 - 40 Gew.-% eines bei Raumtemperatur flüssigen Weichmachers für das Polyvinylchlorid,
wobei sich die Angaben in Gew.-% jeweils auf das Gesamtgewicht der Polymerzusammensetzung beziehen, und
wobei das Verfahren die Schritte
(I) Einspeisen von Polyvinylchlorid (A) in nicht kompoundierter Form in eine Extrusionsvorrichtung mit mindestens einem Rotor, der mindestens drei Knet- und/oder Mischzonen aufweist und in der Lage ist, die Mischung sowohl zu transportieren als auch zu mischen,
(II) Einspeisen des Polyvinylchlorids (A) und von stabilisierendem Additiv (B) in die Extrusionsvorrichtung durch einen ersten Einlass, der in der Nähe der Antriebseinheit und neben einem ersten fördernden Segmentabschnitt des mindestens einen Rotors angeordnet ist;
(III) Einspeisen des Weichmachers zum mit dem stabilisierenden Additiv vermischten Polyvinylchlorid durch mindestens zwei voneinander beabstandete Einlasse, wobei der Weichmacher in mindestens zwei Portionen von jeweils etwa 20-80 Gew-%, bezogen auf das Gesamtgewicht des Weichmachers, zum Polyvinylchlorid zugegeben wird, und zwischen der Zugabe der einzelnen Portionen eine Knet- und/oder Mischzone angeordnet ist,
(IV) Bearbeiten des Weichmacher/Polyvinylchlorid Gemischs bei einer Temperatur um oder oberhalb der Glasübergangstemperatur des Polyvinylchlorids, wobei die Temperatur des Gemischs 150°C nicht übersteigt bis der Weichmacher im Wesentlichen vollständig in das Polyvinylchlorid eingearbeitet wurde.
(V) gegebenenfalls Einspeisen des festen Bestandteils zum mit dem Weichmacher vermischten Polyvinylchlorid in einem Abschnitt, an dem mindestens 80 Gew.-% der Gesamtmenge des Weichmachers in das Polyvinylchlorid eingearbeitet wurden,
(VI) gegebenenfalls Entgasen und Extrudieren der Mischung durch die Extrusionsdüse,
umfasst.

3. Verfahren gemäß Anspruch 1 oder 2, **dadurch gekennzeichnet, dass** es sich beim dem nicht-compoundierten Polyvinylchlorid um durch Suspensionspolymerisation hergestelltes Polyvinylchlorid handelt.

4. Verfahren gemäß einem der Ansprüche 1 bis 3, **dadurch gekennzeichnet, dass** die zur Extrusion verwendete Extrusionsvorrichtung ein Paar von im Wesentlichen isomorphen, länglichen Rotoren, die in den Hohlraum passen und zur interpenetrierenden Bewegung nebeneinander angeordnet sind, aufweist.

5. Verfahren gemäß Anspruch 4, **dadurch gekennzeichnet, dass** jeder der Rotoren ein Länge L im Bereich des 32 - 60-fachen, bevorzugt des 36 - 52-fachen seines Durchmessers D aufweist.

6. Verfahren gemäß Anspruch 4 oder 5, **dadurch gekennzeichnet, dass** dem Polyvinylchlorid eine erste Portion Weichmacher bei einem L/D-Verhältnis im Bereich von 1 bis 8 und eine zweite Portion Weichmacher bei einem L/D-Verhältnis von 10 bis 20 zugegeben wird.

7. Verfahren gemäß einem der Ansprüche 1 bis 3, **dadurch gekennzeichnet, dass** als Extrusionsvorrichtung ein Planetenwalzenextruder, ein Ring-Extruder, ein Mehrwellenextruder oder ein Buss-Kneter verwendet wird.

8. Verfahren gemäß einem der Ansprüche 2 bis 7, **dadurch gekennzeichnet, dass** der feste Bestandteil, insbesondere der mineralische Füllstoff, zum mit dem Weichmacher vermischten Polyvinylchlorid in einem Abschnitt zugegeben wird, an dem mindestens 95 Gew.-%, bevorzugt mindestens 99 Gew.-% des Weichmachers in das Polyvinylchlorid eingeknetet wurden.

9. Verfahren gemäß einem der Ansprüche 2 bis 8, **dadurch gekennzeichnet, dass** dem Polyvinylchlorid im Schritt (V) mindestens 80 Gew.-%, bevorzugt mindestens 95 Gew.-%, und besonders bevorzugt mindestens 99 Gew.-% der Gesamtmenge des festen Bestandteils zugegeben werden.

10. Verfahren gemäß einem der Ansprüche 2 bis 9, **dadurch gekennzeichnet, dass** die Mischung aus Weichmacher und PVC auf eine Temperatur von mindestens 30°C unterhalb der Glasübergangstemperatur (Tg) des Polyvinylchlorids, bevorzugt 15°C unterhalb der Tg des PVC's und besonders bevorzugt oberhalb der Tg des Polyvinylchlorids eingestellt wird.

11. Verfahren gemäß einem der Ansprüche 2 bis 10, **dadurch gekennzeichnet, dass** die einzelnen Portionen für das Einspeisen des Weichmachers zum mit dem stabilisierenden Additiv vermischten Polyvinylchlorid im Schritt (III), etwa 30 bis 70 Gew.-%, bevorzugt etwa 40 bis 60 Gew.-%, bezogen auf das Gesamtgewicht des Weichmachers, ausmachen.

12. Verfahren gemäß Anspruch 11, **dadurch gekennzeichnet, dass** der Weichmacher in zwei Portionen zum Polyvinylchlorid zugegeben wird, wobei die zuerst zugegebene Portion 55 ± 3 Gew.-% und die danach zugegebene Portion 45 ± 3 Gew.-% der Gesamtmenge des Weichmachers ausmacht.

13. Verfahren gemäß einem der Ansprüche 2 bis 12, **dadurch gekennzeichnet, dass** der Gehalt des festen Bestandteils in der Polymerzusammensetzung 0,01 bis 35 Gew.-%, bevorzugt 0,3 bis 30 Gew.-% beträgt.

14. Verfahren gemäß einem der Ansprüche 2 bis 13, **dadurch gekennzeichnet, dass** der feste Bestandteil erst in das Polyvinylchlorid eingearbeitet wird, nachdem der Weichmacher im Wesentlichen vollständig in das Polyvinylchlorid eingearbeitet wurde.

15. Verfahren gemäß einem der vorstehenden Ansprüche, **dadurch gekennzeichnet, dass** die durch die Extrusionsvorrichtung eingebrachte Energiemenge sowohl in Form von mechanischer Energie als auch im Form von thermischer Energie, insbesondere durch Heizelemente, eingetragen werden kann und dass am Ende der Extrusionsvorrichtung eine Produkttemperatur von mindestens 130°C bis maximal 170°C, bevorzugt 135°C bis 155°C und besonders bevorzugt 140 bis 150°C erreicht wird.

16. Verfahren gemäß einem der vorstehenden Ansprüche, **dadurch gekennzeichnet, dass** die homogene Polymerzusammensetzung eine thermische Reststabilität, bestimmt gemäß DIN 53 381-1 bei 180 °C, von mindestens 90 Minuten, bevorzugt mindestens 100 Minuten und besonders bevorzugt mindestens 105 Minuten aufweist.

17. Verfahren gemäß einem der vorstehenden Ansprüche, **dadurch gekennzeichnet, dass** die extrudierte homogene Polymerzusammensetzung in Form von Granulat vorliegt.
